(19) Europäisches Patentamt
European Patent Office
Office européen des brevets

(11) EP 3 761 017 A1

(12) EUROPEAN PATENT APPLICATION

(43) Date of publication:
06.01.2021 Bulletin 2021/01

(51) Int Cl.:
$G01N\ 25/72$ (2006.01)

(21) Application number: 19184640.1

(22) Date of filing: 05.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Aleris Rolled Products Germany GmbH
56070 Koblenz (DE)

(72) Inventors:
• Lachnitt, Simon
56072 Koblenz (DE)
• Kleusch, Andreas
56218 Mühlheim-Kärlich (DE)

(74) Representative: Dey, Michael
Weickmann & Weickmann
Patent- und Rechtsanwälte PartmbB
Postfach 860 820
81635 München (DE)

(54) **METHOD AND APPARATUS FOR THERMOGRAPHIC INSPECTION OF THE SURFACES OF A MOVING HOT ROLLED METAL STRIP ARTICLE**

(57) The invention relates to a method for thermographic inspection of the upper and lower surface of a moving hot rolled metal strip article, comprising the steps of measuring with a first camera arrangement, comprising at least one thermographic camera, the thermal radiation from the upper surface of the metal strip article, measuring with a second camera arrangement, comprising at least one thermographic camera, the thermal radiation from the lower surface of the metal strip article, wherein the thermal radiation is measured in a wavelength range of 1 to 14 $\mu$m, measuring the velocity of the metal strip article, and producing a thermographic image of the upper surface of the metal strip article and a thermographic image of the lower surface of the metal strip article from the measured thermal radiation and the velocity of the metal strip article. The invention also relates to an apparatus for conducting the method of thermographic inspection of a moving hot rolled metal strip article.

**Fig. 1**

**Description**

FIELD OF THE INVENTION

The invention relates to a method and an apparatus for thermographic inspection of the surfaces of a moving hot rolled metal strip article, in particular an aluminium or aluminium alloy strip or plate by preparing thermographic images of the surfaces.

BACKGROUND OF THE INVENTION

Metal strip articles, particularly those made of aluminium and aluminium alloys, are commonly produced by a process comprising casting, for example direct chill (DC) casting, optionally homogenization and/or preheat, hot rolling and optionally cold rolling, to obtain its final gauge. Depending on the specific alloy, a heat treatment after the rolling operation(s) and possibly intermediate annealing heat treatments can be carried out. Hot rolling may be performed in a reversing mill with usually one rolling stand, where the metal strip is rolled back and forth several times through the rolling stand, until it has reached the desired thickness. According to another rolling practice, a cast ingot is first hot rolled to a transfer gauge in a (reversing) roughing mill and is then transferred on a transfer table to a hot finishing mill. The hot finishing mill can be of a single-stand reversing hot rolling type as well or of a multi-stand tandem hot rolling type, which is passed only once.

The surfaces of hot rolled metal strip articles such as aluminium alloy strip articles may have some surface defects after the rolling process, for example scratches, rolled-in-dirt, laminations and delaminations. The material itself may also have defects, for example hot cracks, edge cracks or blisters.

An early detection of such defects allows defective material to be sorted out which reduces the occupied plant capacity in subsequent process steps by avoiding that defective material is further processed.

In WO 2004/069442 a device for manual inspection of the surface of rolled products is described. The inspection procedure requires an additional step in which the material must be turned, and thus the process is not applicable to moving strips. For continuously moving strips, only samples can be taken and inspected and a sampling can only take place in the initial or final area of a production process.

EP 0 898 163 B1 discloses a method and apparatus for automatic inspection of moving surfaces, wherein an optical measuring method in the visible light range is used to highlight defects. The rolled material is illuminated and surface defects can be detected due to local deviations in the camera image.

WO 01/23869 A1 discloses a device and method for inspecting the surface of a continuously fed ribbon material, wherein the material is also illuminated with visible light. In contrast to manual inspections, the process can also be installed in the production line and allows continuous inspection of rolled products without the additional step of turning the material. However, as the inspection is conducted in the visible light range, only visible defects can be detected.

In view of the above, it is an object of the invention to provide a method and an apparatus for inspection of the surfaces of rolled metal strip articles that overcome the afore-mentioned disadvantages of prior art inspection methods, in particular a method which allows a continuous inspection of the surfaces of rolled metal strip articles not limited to visible defects.

SUMMARY OF THE INVENTION

This and other objects and further advantages are met or exceeded by the present invention providing a method for thermographic inspection of the upper and lower surface of a moving hot rolled metal strip article, comprising the steps of

- measuring with a first camera arrangement comprising at least one thermographic camera, the thermal radiation from the upper surface of the metal strip article,
- measuring with a second camera arrangement comprising at least one thermographic camera, the thermal radiation from the lower surface of the metal strip article,
  wherein the thermal radiation by each thermographic camera is measured in a wavelength range of 1 to 14 $\mu$m,
- measuring the velocity of the metal strip article, and
- producing a thermographic image of the upper surface of the metal strip article and a thermographic image of the lower surface of the metal strip article from the measured thermal radiation and the velocity of the metal strip article.

The object and further advantages are also met or exceeded by the present invention providing an apparatus for thermographic inspection according to claim 10 that allows to carry out the above method. Advantageous embodiments are set out in the dependent claims.

DESCRIPTION OF THE INVENTION

As will be appreciated herein below, except as otherwise indicated, aluminium alloy and temper designations refer to the Aluminium Association designations in Aluminium Standards and Data and the Registration Records, as published by the Aluminium Association in 2018 and are well known to the persons skilled in the art. The temper designations are laid down in European standard EN515.

For any description of alloy compositions or preferred alloy compositions, all references to percentages are by weight percent unless otherwise indicated.

The method and apparatus of the invention allow to obtain thermographic images of the upper and lower surfaces of a metal strip article for inspection purposes to detect defects in the surface or the material below the surface.

The advantage of the method and apparatus according to the invention compared to a manual inspection is that the inspection can be automated for each strip article without an additional process step being necessary to turn and guide the hot rolled article into an inspection device. The thermographic images obtained by the method of the invention may be displayed e.g. on a computer screen, preferably continuously and in real time while the strip article is moving through the camera arrangements. Thus, the thermographic image may be conveniently inspected by a user, but it may also be inspected automatically by a computer algorithm.

According to the invention, the thermographic cameras measure in a wavelength range of 1 to 14 $\mu$m. In a preferred embodiment, the thermal radiation by each thermographic camera is measured in a wavelength range of 3 to 5 $\mu$m or 8 to 14 $\mu$m. These preferred wavelength ranges are particularly suitable for smooth and low-emission surfaces such as hot rolled aluminium or aluminium alloy strip articles. Furthermore, there is a high transmissivity of vapours such as water vapour in these wavelength ranges, which protects the measurement results from interference by process vapours of evaporating oil-in-water hot rolling emulsions.

Therefore, the influence of vapours resulting from the hot rolling process on the thermographic images is avoided, because the vapours usually absorb within the visible light range of around 400 to 800 nm, but not within the above preferred wavelength ranges. This allows an installation directly in the hot rolling line, i.e. an early detection of the defects is possible so that defective material can be sorted out, which reduces the occupied plant capacity in subsequent process steps by avoiding that defective material is further processed. The thermal radiation of the upper surface and the lower surface is preferably measured directly after hot rolling of the metal strip article is completed. In view of the above, the method according to the invention enables a more cost and time effective production process of metal strip articles.

Another advantage of the method according to the invention is that surface defects can be detected which are not optically visible but cause only a locally changed thermal radiation, for example defects in the material under the surface such as blisters. Further, illumination devices for visible light are not necessary.

Metal strip articles according to the invention are metal strips, bands, slabs or plates, in particular metal strips and plates. The strip articles can be made of different metals, in particular aluminium and aluminium alloys, or iron and iron alloys such as steel. The hot rolled metal strip articles are preferably hot rolled aluminium or aluminium alloy strip articles. Preferred aluminium alloys are 1000-series, 2000-series, 3000-series, 4000-series, 5000-series, 6000-series and 7000-series aluminium alloys.

The hot rolled metal strip article may also comprise several layers, which have been bonded together during the hot rolling process. Such hot rolling is termed roll-bonding and is often used to produce e.g. brazing sheet or multilayer sheet products made of aluminium alloys. In roll-bonding, two or more ingots or liner plates of different alloys are stacked one on top of the other, hot rolled, and after hot rolling a method according to the invention may be used to check whether the metallurgical bonding between the different layers has been satisfactory. Preferred alloy combinations for roll-bonding contain, but are not limited to, 2000- and 1000-series alloys, 7000- and 1000-series alloys as well as 3000- and 4000-series alloys.

The hot rolled metal strip article may be hot rolled on a reversing mill or a tandem mill. The method according to the invention is preferably carried out directly after the hot rolling operation is completed, while the hot rolled metal strip article is still hot or warm, at least before it has cooled down to ambient temperature, and before any subsequent operation, such as coiling and/or cold rolling. The method of the invention may be carried out while the hot rolled metal strip article leaves the hot rolling mill after the last rolling pass. Preferably, the method is carried out while the hot rolled metal strip article moves along a roller table or transfer table after the last hot rolling pass.

The thickness of the moving hot rolled metal strip article is commonly in the range of 1.5 to 300 mm. For plates, a thickness of 8 to 300 mm is preferred and for slabs that are usually used for strip production, a thickness of 15 to 50 mm is preferred, in particular 16 to 32 mm. Strips, for example aluminium or aluminium alloy strips, have preferably a thickness of 3.0 to 15 mm.

The thermographic cameras measure the thermal energy radiated from the hot-rolled metal strip article and present it as a thermographic image. In a preferred embodiment of the invention, the thermographic images are produced from the measured thermal radiation after correction for the emissivity of the metal strip article.

The emissivity of a surface is its effectiveness in emitting energy as thermal radiation. Quantitatively, the emissivity is the ratio of the thermal radiation from a surface to the radiation from an ideal black surface at the same temperature as given by the Stefan-Boltzmann law. The ratio varies from 0 to 1, wherein the surface of a perfect black body has an emissivity of 1. The emissivity generally depends on the temperature, the material and the surface structure. Some rolled aluminium strip surfaces have a low emissivity and it varies depending on the aluminium alloy and hot rolling process settings, such as hot rolling emulsion formulation or roll roughness. By way of example, if the metal surface has an emissivity of 0.1, the measured thermal radiation is corrected by multiplication with ten. The correction is preferably done separately for the upper and the lower surface.

The correction can be conducted using a table from which the emissivity for the thermographic cameras is provided for each process, depending on the type of metal, the temperature and the characteristics of the surface. This is possible with the estimated strip temperature calculated by the control system. Preferably, a measured temperature of the metal strip article on the respective surface is used to determine the emissivity of the respective surface.

The temperature of the metal surface can be measured with a suitable device for measuring the temperature, i.e. a thermometer, preferably a pyrometer. This allows a dynamic adjustment of the emissivity. In a preferred embodiment of the invention, one pyrometer can be used for the method and apparatus, which means that the same measured temperature is assumed for the upper surface and the lower surface. More preferably, each surface has its own pyrometer, i.e. the method and apparatus of the invention more preferably comprises at least one pyrometer for measuring the temperature of the upper surface of the moving hot rolled metal strip article and at least one pyrometer for measuring the temperature of the lower surface of the moving hot rolled metal strip article.

The pyrometer is preferably a multi-wavelength pyrometer. Multi-wavelength pyrometers allow precise temperature measurements of hot rolled metal strip articles, in particular hot rolled aluminium or aluminium alloy strip articles, since the emissivity may be compensated by measuring in several wavelength ranges.

The thermographic cameras may use the measured temperature value of a pixel and compare it with the reference value to adjust the emissivity. The average value of all pixels in an image area can also be used instead of one pixel. A reference value for the thermographic cameras can be taken from the strip temperature measurement, or if no measurement is available, as the calculated strip temperature from the rolling pass schedule. If none of those values is available, the thermographic camera can measure with a default emissivity value.

The temperature of the upper and/or the lower surface of the metal strip article is preferably about 20 °C to about 600 °C, preferably about 100 °C to about 500 °C, more preferably about 150 °C to about 480 °C and most preferably about 200 °C to about 480 °C. The sampling frequency of the thermographic cameras is preferably ≥ 25 Hz, more preferably ≥ 50 Hz, even more preferably 100 Hz and most preferably 200 to 260 Hz, in particular 240 Hz.

The velocity or speed of the moving strip article is a parameter that allows to produce an image of the moving strip article over its length for the upper and the lower surfaces from the measured thermal radiation in the form of single images. The velocity at which the metal strip article is moved along a rolling line, for example on a roller table or transfer table, is preferably transmitted to a computer unit or computer control system. The velocity is used to calculate from the separated images - taken with the above-mentioned sampling frequency - a continuous image, i. e. an image over its length of the upper surface and the lower surface of the moving strip article. The calculation is done with a stitching algorithm which working principle is known, for example, from the panorama picture function of digital cameras. The principle is further explained below.

The velocity can be taken as the scheduled velocity of the hot rolled strip article along the roller table or transfer table. Alternatively, the velocity can be obtained, for example, by calculating it from the rotation speed and the roller diameter of the roller table rollers, or the deflection rollers in the rolling line of the moving strip. Preferably, the velocity is measured directly on the strip article. A preferred device for measuring the velocity of the moving strip article is a laser speed measuring device. The laser speed measuring device measures the velocity of the moving strip article, preferably close to the area wherein the thermal radiation is measured by the cameras. In order to prevent the laser from influencing the thermographic images, the laser speed measuring device should preferably not emit radiation in the measured wavelength range of the thermographic cameras.

The first camera arrangement comprises at least one thermographic camera and measures the thermal radiation from the upper surface of the metal strip article, whereas the second camera arrangement, also comprising at least one thermographic camera measures the thermal radiation from the lower surface of the metal strip article. In a preferred embodiment, the metal strip article is moving substantially horizontally. If the metal strip article is not moving substantially horizontally, upper and lower surface means the two largest surfaces of a strip article and the two surfaces can be designated as a first surface and a second surface. As thermographic cameras, regular thermographic cameras for temperature measurement purposes can be used. Examples of such thermographic cameras are ImageIR® or PIR uc SWIR from InfraTec GmbH, PYROVIEW M from DIAS Infrared GmbH, ARC from Land Instruments Ltd, optris PI or LumaSense from Optris GmbH and MIKRON MC from Technologies, Inc.

In a preferred embodiment of the invention, the first camera arrangement and the second camera arrangement each comprise at least two thermographic cameras, preferably two or three thermographic cameras, to measure the thermal radiation from the upper and the lower surface of the metal strip article in order to increase the resolution of the obtained thermographic images. If two or more thermographic cameras are used, the fields of view of the thermographic cameras should preferably overlap.

The number of thermographic cameras and the required image resolution of each thermographic camera can be calculated from the minimum surface defect size to be detected. Preferably, the thermographic camera is arranged in a way that the larger image resolution dimension is aligned with the width dimension of the rolled metal strip article and the smaller image resolution dimensions is aligned with the length dimension and moving direction of the rolled metal strip article. The pixel angle $\alpha_{px}$ in rad can be calculated from the thermographic camera's field of view angle $\alpha_{FOV}$ in rad and the image resolution in the orientation $Res_{px,X}$ in pixels:

$$\alpha_{px} = \frac{\alpha_{FOV}}{Res_{px,X}}$$

The pixel size can be calculated as $res_{Center}$ for the center of the thermographic camera's field of view and $res_{Left}$ and $res_{Right}$ for the outer margins of the thermographic camera's field of view. Having the thermographic camera sensor mounted at a distance h away from the metal strip article surface and tilted by the inclination angle $\alpha_{mech}$ against the perpendicular of the metal strip article, each resolution can be calculated from the following formulae:

$$res_{Center} = \frac{h}{\cos(\alpha_{mech})} * \alpha_{px}$$

$$res_{Left} = \frac{h}{\cos\left(\alpha_{mech} + \frac{\alpha_{FOV}}{2}\right)} * \alpha_{px}$$

$$res_{Right} = \frac{h}{\cos\left(\alpha_{mech} - \frac{\alpha_{FOV}}{2}\right)} * \alpha_{px}$$

Adjustment of the mechanical inclination angle $\alpha_{mech}$ or the mounting distance h allow adjustments for a given thermographic camera type, while the thermographic camera field of view angle $\alpha_{FOV}$ and the image resolution $Res_{px,X}$ require a modification in the thermographic camera type. If the desired resolution cannot be achieved, the thermographic camera image resolution or the number of thermographic cameras needs to be increased. The achieved resolution should be $\leq 2,0$ mm to be able to detect typical hot rolling defects. In a preferred embodiment of the invention, the achieved resolution is $\leq 1,0$ mm, more preferably $\leq 0,5$ mm.

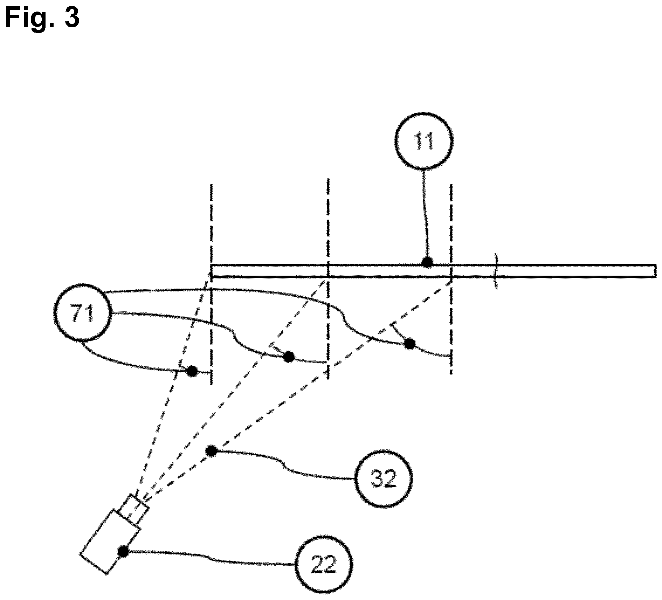

It is further preferred that the thermographic cameras for the underside of the strip (the lower surface) are out of the area below the strip article to protect them from any falling dirt. The angle between the camera direction and the perpendicular in the middle of the strip plane is preferably less than 45°, more preferably less than 40° (cf. Fig. 3). In a preferred embodiment, the thermographic cameras are protected from mechanical or environmental damage by a protective housing. The part of the protective housing which is shielding the field of view of the thermographic camera(s) contains a window, preferably made of Germanium oxide or Chalcogenide glass to allow transmission of radiation to the thermographic camera(s). In another preferred embodiment, the thermographic cameras or the window(s) of the protective housing have an air purge device that protects the thermographic camera lenses or the windows(s) of the protective housing from contamination by dust and process vapours with compressed air.

The invention also relates to an apparatus for conducting the above outlined and claimed method for thermographic inspection. The apparatus comprises

- a first camera arrangement, comprising at least one thermographic camera,
- a second camera arrangement, comprising at least one thermographic camera,
  wherein the thermographic cameras are configured to measure the thermal radiation from the surfaces of a moving metal strip article and the thermal radiation is measured in wavelength range of 1 to 14 $\mu$m, and wherein
  the first thermographic camera arrangement is arranged to measure the thermal radiation from the upper surface of the metal strip article and the second thermographic camera arrangement is arranged to measure the thermal radiation from the lower surface of the metal strip article,
- a device for measuring the velocity of the moving metal strip article, and
- a computer unit for producing a thermographic image of the upper surface and a thermographic image of the lower surface of the metal strip article from the measured thermal radiation and the velocity of the moving metal strip article.

The embodiments of the method according to the invention are also applicable to the apparatus of the invention and vice versa, and preferred embodiments of the method are also preferred in the apparatus, and vice-versa.

The computer unit preferably performs a conversion of each thermographic camera image into a coordinate plane of the upper surface of the moving metal strip article for the thermographic camera(s) on the upper side and into a coordinate plane of the lower surface of the moving strip article for the thermographic camera(s) on the lower side of the moving strip article. The apparatus according to the invention preferably comprises a computer unit, configured to calculate from the separated thermographic images a continuous image, i.e. an image over its length of the upper surface and the lower surface of the moving strip article.

The computer unit may assemble the thermographic camera images, converted into the moving metal strip article coordinate planes with a stitching algorithm to form an image of the moving strip article over its length for the top and bottom sides. The velocity of the moving metal strip article can be used to determine the coordinates in the moving direction of each individual thermographic camera image in the stitching algorithm. If several thermographic cameras are used for each side of the moving metal strip article, the coordinates of the image centre points of each thermographic camera image should be known in the coordinate planes of the moving metal strip article. These coordinates in the coordinate planes of the moving metal strip article can be used as image coordinates in the width direction of the stitching algorithm.

The metal strip article preferably moves on a roller table and the rolls of the roller table are either cylindrical rolls that are tilted or double conical rolls. A greater width of the metal strip article raises the passline, i. e. it reduces the distance between the upper surface and the first camera arrangement and enhances the distance between the lower surface and the second camera arrangement. In a preferred embodiment of the invention, the computer unit has a data link to the rolling control and receives the geometric dimensions of the moving strip article. This allows that the width of the rolled material, which changes the position of the passline on the roller table, i. e. the distance to the cameras, can be taken into account for coordinate transformation.

If the computer unit has a data link to the moving control and receives the geometric dimensions of each moving strip article, the valid image area in the stitching algorithm can be limited to the valid dimensional range of the moving strip article. If no data interface or data link is available, the image area can be limited to all pixels that have acquired a measured temperature value.

The apparatus according to the invention preferably comprises one or more devices for measuring the temperature of the metal strip article, more preferably one or more pyrometer, and most preferably one or more multi-wavelength pyrometer as outlined above in connection with the method of the invention.

The cameras are preferably mounted on a mounting frame connected to the roller table of the rolling mill. It is further preferred that the cameras are moveable, which allows to change the distance between the cameras and the surfaces of the metal strip article. Additionally, an automatic motor focus may automatically focus the camera images when the position of the passline changes.

When the metal strip article is relatively thin, it can bend due to its own weight so that a concave shape is formed on the upper side and a convex shape is formed on the lower side. In the preferred embodiment of the invention, this bending is considered when calculating the coordinate plane conversion of the thermographic images for the upper surface of the metal strip article and for the lower surface of the metal strip article.

As above outlined, the method according to the invention is preferably carried out directly after the hot rolling operation is completed and before any other process step is conducted The horizontal distance between the apparatus and the rolling mill, in particular between the first camera arrangement and the location of the last hot roll operation of the rolling mill, is preferably 3 to 50 m, more preferably 5 to 30 m.

The apparatus preferably further comprises an image display device, e.g. a screen, touch screen or computer screen. The computer unit sends the images of the moving strip article for the upper and lower surfaces to the image display. In a preferred embodiment of the invention, the already acquired and assembled thermographic camera images are send to the image display device while the process of measuring the thermal radiation is still running. A data memory, preferably connected to the apparatus, may record thermographic images of the moving strip article. The identification number of the moving strip article, the aluminium alloy and the geometric dimensions of the moving strip article may also be stored.

BRIEF DESCRIPTION OF THE FIGURES

The invention shall now be described by means of embodiments with reference to the attached drawings in which:

Fig. 1. is a schematic representation of the apparatus according to an embodiment of the invention with a front view on the left and a side view on the right.

Fig. 2. is a schematic representation of a front view of the apparatus according to an embodiment of the invention.

Fig. 3. is a schematic representation of a detailed front view of the apparatus according to an embodiment of the invention.

Fig. 4. is a schematic representation of the computer unit according to an embodiment of the invention.

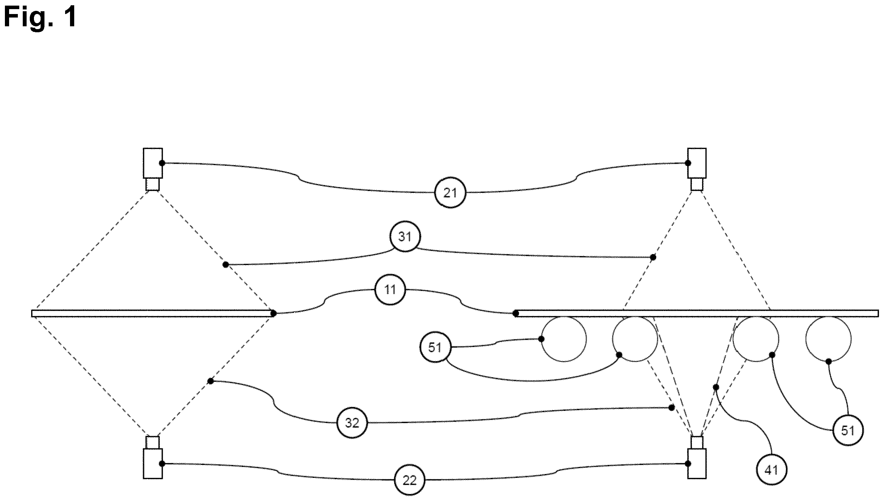

Fig. 1 is a schematic representation of an apparatus according to an embodiment of the invention. It shows on the left a front view and on the right a side view of a basic arrangement with one thermographic camera 21 above the upper surface and one thermographic camera 22 below the lower surface of the moving strip article 11 moving in a rolling line. A thermographic camera field of view 31 on the upper surface, a thermographic camera field of view 32 on the lower surface, the rollers 51 of the roller table and the limitation of the thermographic camera field 41 on the lower surface due to the rollers 51 are shown.

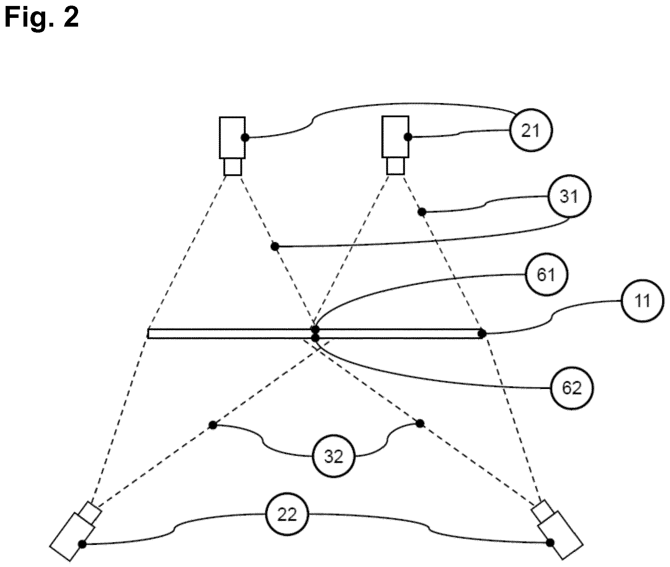

Fig. 2 is a schematic representation of a front view of the apparatus according to the invention, wherein two thermographic cameras 21 above the upper surface and two thermographic cameras 22 below the lower surface of the moving strip article 11 are shown. The thermographic camera fields of view 31 on the upper surface of the moving metal strip article 11 have an overlap 61 and the thermographic camera fields of view 32 on the lower surface of the moving metal strip article 11 have an overlap 62. The thermographic cameras 22 below the lower surface of the moving strip article 11 are placed outside of the moving strip article 11 margins to protect them from falling dirt.

Fig. 3 is a detailed front view of the method and apparatus according to the invention, wherein the moving metal strip article 11, a thermographic camera 22 below the lower surface of the moving strip article 11 mounted outside of the moving strip article 11 margins and the angles 71 between the camera direction and the perpendicular to the strip plane are shown.

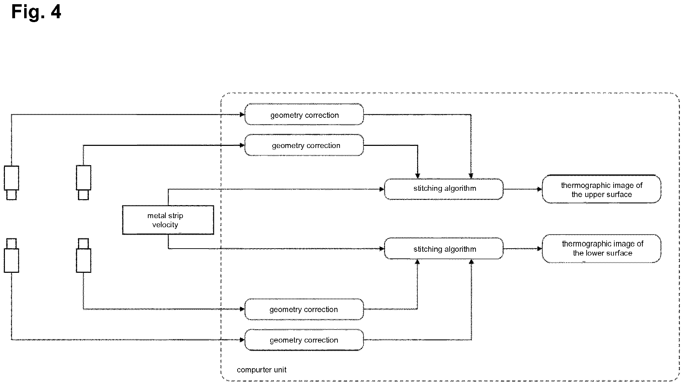

Fig. 4 is a schematic representation of the computer unit according to the invention, wherein the thermographic camera images of two cameras for the upper side and the lower side are subjected to a geometry correction. Afterwards, the stitching algorithm produces, together with the metal strip velocity, a thermographic image of the upper surface and a thermographic image of the lower surface of the moving metal strip.

The invention is not limited to the embodiments described before, and which may be varied widely within the scope of the invention as defined by the appending claims.

**Claims**

1. Method for thermographic inspection of the upper and lower surface of a moving hot rolled metal strip article, comprising the steps of

    - measuring with a first camera arrangement, comprising at least one thermographic camera, the thermal radiation from the upper surface of the metal strip article,
    - measuring with a second camera arrangement, comprising at least one thermographic camera, the thermal radiation from the lower surface of the metal strip article,
    wherein the thermal radiation is measured in a wavelength range of 1 to 14 $\mu$m,
    - measuring the velocity of the metal strip article, and
    - producing a thermographic image of the upper surface of the metal strip article and a thermographic image of the lower surface of the metal strip article from the measured thermal radiation and the velocity of the metal strip article.

2. Method according to claim 1, **characterized in that** the thermal radiation has a wavelength of 3 to 5 $\mu$m.

3. Method according to claim 1 or claim 2, **characterized in that** the metal is aluminium or an aluminium alloy.

4. Method according to any of claims 1 to 3, **characterized in that** the thermographic images are produced from the measured thermal radiation by correcting for the upper surface and the lower surface the thermal radiation with the emissivity of the surfaces.

5. Method according to claim 4, **characterized in that** the emissivity is calculated from the temperature of the surface and the temperature is measured with a pyrometer.

6. Method according to any of claims 1 to 5 **characterized in that** the method is carried out directly after hot rolling of the metal strip article is completed.

7. Method according to any of claims 1 to 6, **characterized in that** the temperature of the metal strip on the upper surface and on the lower surface is 100 °C to 500 °C.

8. Method according to any of claims 1 to 7, **characterized in that** the first camera arrangement and the second camera arrangement each comprise at least two thermographic cameras.

9. Method according to any of claims 1 to 8, **characterized in that** the thermographic images of the upper surface and the lower surface are each continuous images.

10. Apparatus for thermographic inspection of the upper and the lower surface of a moving hot rolled metal strip article, comprising

    - a first camera arrangement, comprising at least one thermographic camera,
    - a second camera arrangement, comprising at least one thermographic camera,
    wherein the thermographic cameras are configured to measure the thermal radiation from the surfaces of the metal strip article and the thermal radiation is measured in a wavelength range of 1 to 14 $\mu$m, and wherein the first thermographic camera arrangement is arranged to measure the thermal radiation from the upper surface of the metal strip article and the second thermographic camera arrangement is arranged to measure the thermal radiation from the lower surface of the metal strip article,
    - a device for measuring the velocity of the metal strip article, and
    - a computer unit for producing a thermographic image of the upper surface and a thermographic image of the lower surface of the metal strip article from the measured thermal radiation and the velocity of the metal strip article.

11. Apparatus according to claim 10, **characterized in that** the wavelength is 3 to 5 μm.

12. Apparatus according to claim 10 or claim 11, **characterized in that** the apparatus further comprises a device for measuring the temperature of the metal strip article.

13. Apparatus according to claim 12, **characterized in that** device for measuring the temperature of the metal strip article is a pyrometer.

14. Apparatus according to any of claims 10 to 13, **characterized in that** the first camera arrangement and the second camera arrangement each comprise at least two thermographic cameras.

15. Apparatus according to any of claims 10 to 14, **characterized in that** the apparatus further comprises a rolling mill.

16. Apparatus according to claim 15, **characterized in that** the distance between the apparatus and the rolling mill in horizontal direction is 3 to 50 m.

# Fig. 1

**Fig. 2**

EP 3 761 017 A1

# Fig. 3

11

EP 3 761 017 A1

# Fig. 4

**EP 3 761 017 A1**

Europäisches
Patentamt
European
Patent Office
Office européen
des brevets

# EUROPEAN SEARCH REPORT

Application Number

EP 19 18 4640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 2 119 513 A1 (JFE STEEL CORP [JP])<br>18 November 2009 (2009-11-18)<br>* paragraph [0041] *<br>* paragraphs [0050], [0051] *<br>* paragraphs [0057] - [0059] *<br>* paragraph [0064] *<br>* paragraph [0073]; figure 9 *<br>* paragraphs [0082] - [0084] *<br>* paragraph [0108] * | 1,3-10,<br>12-16<br>2,11 | INV.<br>G01N25/72 |
| Y<br><br>A | US 2009/196324 A1 (BEYNON THOMAS GEOFFREY RONALD [GB] ET AL)<br>6 August 2009 (2009-08-06)<br>* paragraph [0062] *<br>* paragraphs [0093] - [0095]; figure 1 *<br>* paragraphs [0111] - [0123]; figures 4, 5 *<br>* paragraph [0127] * | 2,11<br><br>1,3-10,<br>12-16 | |
| A | RU 2 659 617 C1 (FEDERALNOE GOSUDARSTVENNOE BYUDZHETNOE OBRAZOVATELNOE UCHREZHDENIE VYS) 3 July 2018 (2018-07-03)<br>* paragraphs [0026], [0033], [0038], [0039] * | 1,10 | TECHNICAL FIELDS SEARCHED (IPC)<br><br>G01N |
| A | WO 87/00632 A1 (KANOR AS [NO])<br>29 January 1987 (1987-01-29)<br>* page 11, lines 11, 12; figure 1 *<br>* page 12, line 15 - page 14, line 14 *<br>* page 28, lines 4-7 * | 1,10 | |
| A | US 2018/202954 A1 (MÖLLER THOMAS [DE] ET AL) 19 July 2018 (2018-07-19)<br>* paragraphs [0024] - [0026], [0029] *<br>* paragraphs [0032], [0035], [0036] *<br>* paragraph [0055] * | 1,10 | |

-/--

The present search report has been drawn up for all claims

| Place of search | Date of completion of the search | Examiner |
|---|---|---|
| The Hague | 7 January 2020 | Marzocchi, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 18 4640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/122815 A1 (LAND INSTRUMENTS INTERNATIONAL LTD [GB]) 27 June 2019 (2019-06-27) * page 4, line 23 - page 5, line 16 * * page 6, lines 1-6 * * page 6, line 26 - page 7, line 26 * * page 15, lines 11, 12 * ----- | 1-16 | |

TECHNICAL FIELDS
SEARCHED (IPC)

The present search report has been drawn up for all claims

| Place of search | Date of completion of the search | Examiner |
|---|---|---|
| The Hague | 7 January 2020 | Marzocchi, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 18 4640

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2020

| Patent document cited in search report | | Publication date | Patent family member(s) | | | Publication date |
|---|---|---|---|---|---|---|
| EP 2119513 | A1 | 18-11-2009 | AU | 2008220048 | A1 | 04-09-2008 |
| | | | CA | 2679667 | A1 | 04-09-2008 |
| | | | CN | 101622082 | A | 06-01-2010 |
| | | | EP | 2119513 | A1 | 18-11-2009 |
| | | | KR | 20090108103 | A | 14-10-2009 |
| | | | KR | 20120049412 | A | 16-05-2012 |
| | | | KR | 20140049072 | A | 24-04-2014 |
| | | | TW | 200914161 | A | 01-04-2009 |
| | | | US | 2010095722 | A1 | 22-04-2010 |
| | | | WO | 2008105479 | A1 | 04-09-2008 |
| US 2009196324 | A1 | 06-08-2009 | BR | PI0907048 | A2 | 07-07-2015 |
| | | | CN | 101932920 | A | 29-12-2010 |
| | | | EP | 2243012 | A2 | 27-10-2010 |
| | | | US | 2009196324 | A1 | 06-08-2009 |
| | | | WO | 2009095643 | A2 | 06-08-2009 |
| RU 2659617 | C1 | 03-07-2018 | NONE | | | |
| WO 8700632 | A1 | 29-01-1987 | AU | 6135786 | A | 10-02-1987 |
| | | | BR | 8606794 | A | 13-10-1987 |
| | | | CN | 86105818 | A | 10-06-1987 |
| | | | DK | 130087 | A | 13-03-1987 |
| | | | EP | 0229816 | A1 | 29-07-1987 |
| | | | FI | 871117 | A | 13-03-1987 |
| | | | JP | S63500336 | A | 04-02-1988 |
| | | | NO | 164133 | B | 21-05-1990 |
| | | | WO | 8700632 | A1 | 29-01-1987 |
| US 2018202954 | A1 | 19-07-2018 | CN | 107849698 | A | 27-03-2018 |
| | | | DE | 102015211853 | B3 | 16-06-2016 |
| | | | EP | 3314036 | A1 | 02-05-2018 |
| | | | JP | 2018520266 | A | 26-07-2018 |
| | | | US | 2018202954 | A1 | 19-07-2018 |
| | | | WO | 2016207315 | A1 | 29-12-2016 |
| WO 2019122815 | A1 | 27-06-2019 | GB | 2569644 | A | 26-06-2019 |
| | | | WO | 2019122815 | A1 | 27-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004069442 A
- EP 0898163 B1
- WO 0123869 A1